# EUROPEAN PATENT APPLICATION

(11) **EP 4 571 316 A1**
(43) Date of publication of application: **18.06.2025**
(21) Application number: 22793593.9
(22) Date of filing: 28.07.2022
(51) Int. Cl.: G01N 35/00, G01N 21/01, G01N 21/25, B01L 3/00, B01L 9/00, G01N 21/03, G01N 21/31

(54) **ACTUATOR DEVICE AND SYSTEM FOR CLINICAL ANALYSIS USING ANALYTICAL CHIPS**

(71) Applicant: Biothink Technologies S.L., 41092 Sevilla (ES)
(72) Inventor: FRANCO GONZÁLEZ, Emilio, 41092 SEVILLA (ES); MOZO MULERO, Marta, 41092 SEVILLA (ES); RODRÍGUEZ DÍAZ, Rafael, 41400 ÉCIJA (Sevilla) (ES)
(74) Representative: Herrero & Asociados, S.L.
(86) International application number: PCT/ES2022/070503
(87) International publication number: WO 2024/023372

(57) **Abstract**

A system for clinical analysis by means of an analytical chip 1000 comprising an actuator device which, in turn, comprises:
- A computer module 100 integrating all the signals received by the system and transforming them into analytical results, connectable through a connectivity module 160 with a data processing module 170 connected to an external large-scale clinical data system to generate patterns of diagnoses.
- A fluid drive module 110 for the impulsion of fluids inside the analytical chip.
- A thermal module 120 to distinguish thermal areas of the analytical chip.
- An artificial vision module 130 of the processes inside the analytical chip.
- An electronic interface 140 that communicates the sensors and actuators integrated in the analytical chip and the actuators of the actuator device with the computer module 100.
- A power management module 150 to autonomously power the portable system inside an external container that protects all the previous modules of the actuator device and where the analytical chip is inserted.

## Description

### OBJECT OF THE INVENTION

The present invention is related to the industry dedicated to biomedical systems that use analysis methods based on microfluidic technology.

More particularly, the present invention relates to an actuator device and system for the control of analytical processes using analytical chips based on microfluidic and electronic technology.

### BACKGROUND OF THE INVENTION

Advances in microfluidic technology have revolutionized clinical testing processes in general and, in particular, molecular biology in enzymatic testing procedures (for example, glucose and lactate assays), proteomics, DNA analysis, and clinical pathology, especially for its rapid diagnosis of diseases. The basic idea of microfluidic (bio)chips is to integrate assay operations, such as detection, as well as sample pre-treatment and sample preparation on one chip (analytical chip). These microfluidic chips or devices are capable of real-time, continuous sampling of tests, for example, fluid samples for biochemical analysis of toxins and other dangerous pathogens. Thus, among the numerous applications of analytical chips is the detection of genetic sequences associated with the SARS-CoV-2 virus, with a peak in the pandemic situation.

In the field of portable analysis systems, there are solutions based on functionalized porous matrices for the detection of different analytes by affinity; these solutions are also called lateral flow tests, and their result is usually interpreted visually by the user, since an isolated colorimetric reaction takes place in a specific area. That is why these methods are considered qualitative, and easily accessible to the user.

In the usual practice in the field of microfluidics, the addition of image monitoring is one of the reasons why these systems are generally manufactured on transparent substrates. However, this image monitoring is usually carried out by integrating the analytical chip into commercial magnifying glasses or microscopes, with no communication between the microfluidic delivery system (generally syringe or peristaltic pumps) in the chip and the system used for reading (through a vision system) the chip. In this way, the information by imaging only serves to obtain a final result, not being able to influence the progress of the analytical process.

On the other hand, there are developments in which the advancement of the fluid front within the microfluidic platform is carried out by generating acoustic pressure gradients along the microfluidic path, through the addition of sensors and actuators in the own microfluidic platform, or by generating different electrical potentials in digital microfluidic systems. Thus, there are drive systems based on acoustic waves for microelectrode arrays (MEA: "MicroElectrode Arrays") and also drive systems for the movement of drops of the fluid front along an electronic interface in a DMF type or digital microfluidic (DMF: "Digital MicroFluidics") platform, which is a platform for lab-on-chip systems based on the manipulation of microdroplets.

In the state of the art there are different approaches to an electronic interface system with microfluidic chips: the above mentioned "lab-on-a-chip" systems and the microelectrode array MEA systems. The most common embodiment of a MEA system is an open well with electrodes on a glass bottom (transparent MEA systems) for electrical connection with tissue cultured therein and wherein image monitoring is performed by microscopy. In MEA systems with a high concentration of electrodes, the image of the tissue is generated from the electrical signal received by the different electrodes of the array. On the other hand, "lab-on-a-chip" systems have been on the rise in recent years, there being analysis systems aimed at carrying out different tests, following different integration methods depending on the type of analytical process. In the case of determinations that require a vision system to capture colorimetric or fluorimetric signals, it is common to integrate the system into mobile phones, in which the signal is processed using software specifically developed for that purpose. These solutions, therefore, do not have connectivity between the drive system of the fluid front and the vision system itself, as they are independent systems.

On the other hand, solutions based on the reading of signals generated in the analytical chip, being i) colorimetric by precipitating colored agents (for example, in the case of lateral flow assays or "paper-based assays") or ii) electrochemical tests by measuring the redox potential generated during an enzymatic reaction (for example, in the case of bedside test systems or "point-of-care" for determinations of biochemical parameters such as glucose or blood gas analysis), there are only solutions that i) combine artificial vision and a drive system but they only work for the case of colorimetric tests, or ii) combine a drive system and an electronic interface but they only work for the case of electrochemical tests.

There are different "point-of-care" systems on the market that convert the detection method into a semi-quantitative one by incorporating an artificial vision system through which to relatively quantify the result obtained in the analysis area. In these systems, therefore, the fluidic control is carried out passively through the use of porous substrates that generate the characteristic lateral capillary flow of this analysis methodology. But, in this way, the fluidic control and the artificial vision system are totally disconnected from each other, being independent entities and therefore only being able to be combined in simple tests.

In the state of the art, the different "point-of-care" systems are divided into different types, mainly portable systems and desktop systems. In the case of desktop systems, either because of their size or because of their need to be connected to the electrical network, their use is directed to fixed places such as consultations, laboratories or specialized analysis sites. Within these systems there are the most complex applications, such as crop control, analysis of genetic and immunological samples, and multi-analytical systems (for example, there are commercial systems that combine portable glucometers and gas meters with complex analytical equipment that are dependent on connection to the electrical grid, in a mobile matrix with high-performance batteries and connectivity to the electrical grid to power these devices). To try to solve these drawbacks, portable systems are based on the use of power management systems that allow their use without the need to be connected to the electrical network, but these systems are usually used in applications such as blood gas analysis or the quantification of metabolites by electrochemical detection, since more complex detection systems require a higher power supply than that supplied by portable battery systems.

Within portable "point-of-care" analysis systems, the use of voltammetric or amperometric systems is known to determine the concentration of different analytes in biological samples, where either the measurement of the potential change or the generation of current is carried out in an electrochemical cell in which an enzymatic reaction is produced depending on the analyte to be measured. For the measurement of these analytes, it is common to use gold and carbon nanotubes-functionalized polymer electrodes and the fluidic control is usually carried out by the integration of capillary pumps within the chip itself, but for this reason these portable systems are only suitable for simple reactions where the flow requires only a single interaction.

On the other hand, it is known that in the generation of automated devices of the well-known molecular biology technique PCR or polymerase chain reaction (PCR: "Polymerase Chain Reaction"), the combination of a microfluidic drive system and a thermal control module is necessary. Thermocycling systems for PCR applications allow multiple genetic amplification tests to be carried out to identify the presence of different genetic sequences in the sample. This type of trial presents some examples at the "point-of-care" level in which the control of fluids is carried out in the device itself. Similarly, in MEA systems, the combination of an electronic interface with a thermal control module is common in the field of application of tissue culture for electrophysiological study. In this case, the microelectrode systems can have the thermal control system coupled thereto, or they can use external means to achieve the indicated culture conditions. In the current state of technology, there are temperature control devices that are also attached to artificial vision systems for monitoring cell cultures. In these devices there is therefore a thermal control module that performs an accurate monitoring of the temperature of the culture chamber; on the other hand, the image monitoring system is individualized in the system, not being connected to the temperature control system. In these systems, the temperature of the culture is controlled while a visual control thereof is carried out by taking "time-lapse" type images. These units, being intended to maintain very specific temperature and humidity conditions, do not differentiate thermal areas, thus being a very simple temperature control system.

As in conventional thermocycling systems, a combination of a thermal module and an artificial vision system is used to measure the fluorimetric signal, in portable quantitative genetic analysis systems a fluid control is added that allows automation in the analytical chip, avoiding the need to manipulate the sample by the user. These systems include: a thermal control system that allows thermocycling to be carried out according to the pre-established schedule, a drive system that moves the liquids involved in the analytical process through different chambers in which said steps are carried out and an artificial vision system that, together with the adaptation of fluorimetry filters, allow the measurement of the fluorimetric signal generated in each of the samples. These types of devices usually allow the multiplexing of several samples in a single piece of equipment, but they only allow one type of test to be carried out per operating cycle - that is, all the tests to be carried out at the same time must be exactly the same. In these systems, the genetic analysis of samples is carried out in an automated manner, but there is only one temperature program per individual load and each cycle is dependent on the program to be used in the platform.

Therefore, the objective technical problem that arises is to provide a portable system for reading analytical chips and acting on them that may allow different types of tests in a single analytical chip, which can also interact with analytical platforms, performing the sensing of signals provided by the sensors integrated in the cards and interconnecting the analytical chips.

### DESCRIPTION OF THE INVENTION

The present invention is intended to solve the problem mentioned above, by providing a system for clinical analysis using analytical chips (microfluidic devices), capable of performing different types of tests in a single active analytical chip using a system actuator device that communicates directly with the chip through different interfaces.

The present invention integrates the analytical chip with the actuator device in the same system, which has an electronic interface capable of communicating with the conductive elements of the chip, thereby being able to collect the signals generated in the analytical chip and therefore being able to carry out all kinds of electrochemical tests in the system.

In addition, the degree of complexity of the clinical tests allowed by the invention increases by virtue of a drive mechanism integrated in the system and that also makes possible the parallelization of different tests in a single analytical chip.

Additionally, the invention integrates the drive mechanism of microfluidics with a thermal module and an artificial vision module, with which it is not only possible to carry out a complete thermal process through image monitoring and the consequent measurement of light results being obtained, but it is also possible to parallelize different processes in a single analytical chip by combining different thermal areas in a single chip. This makes it possible to carry out different applications simultaneously, therefore not depending on attached processes for the selection of conditions. In addition, the artificial vision module not only allows the measurement of the results once the process is finished, but also works as a real-time control of the process progress in the analytical chip, something that is not available in the solutions available in the state of the prior art.

One aspect of the invention refers to an actuator device for a clinical analysis system that uses an analytical chip with which the actuator device interacts, the actuator device comprising the following components:
- a portable external container for housing and supporting a plurality of actuation modules of the actuator device, the portable container comprising an input bay for introducing the analytical chip inside the actuator device coupling it with the plurality of actuation modules, wherein the plurality of actuation modules comprise at least one fluid drive module, a thermal module and an artificial vision module;
- a computer module, housed inside the external container, comprising a plurality of electronic control blocks, each electronic control block connected to one of the plurality of actuation modules, the electronic control blocks configured to receive signals obtained from some sensors integrated in the actuation modules and to send signals to activate actuators integrated in the actuation modules, the computer module being configured to generate process information and analytical information from the signals received from the control blocks and from signals obtained by some sensors integrated in the analytical chip and to deliver some analytical results obtained from analytical information processing carried out by the computer module;

- an electronic interface, housed inside the external container, which communicates the computer module with the analytical chip, through which the computer module receives the signals obtained by the sensors integrated in the analytical chip and sends signals to activate actuators integrated in the analytical chip;
- a power management module comprising a battery bank housed inside the external container and configured to power the plurality of actuation modules comprised by the actuator device.

Another aspect of the invention relates to a system for clinical analysis comprising the actuator device defined above and an analytical chip with which the actuator device is integrated.

The advantages of the present invention compared to the previous state of the art are fundamentally:
- The combination of an electrode interface for the control of the signals generated by the analytical chip, as well as the possibility of acting locally in the analytical chip itself while carrying out a visual control of the system, taking place a feedback between the electronic communication and artificial vision, allows adding unique functionalities to the system. By way of example and in a non-limiting manner, some of them are:
   - The generation of hybrid measurement systems in which the emitter or sensor are in different systems. Using the artificial vision system as a sensor and changing the emitter by integrating different light emitters in the analytical chip, a system with multiple emitters is achieved without requiring a set of actuators in the artificial vision system.
   - Another application is the use of electrodes as sensors through direct contact with the sample, being able to parallelize visual measurements with electrochemical determinations in the system itself.
- The provision of this electronic interface with the analytical chip makes it possible to add different functionalities to the actuator device of the system, allowing light actions to be carried out in the system, as well as different types of detection (colorimetric, fluorimetric, turbidimetric, chemiluminescent, electrochemical...) on the analytical chip. There are no solutions in the state of the art capable of integrating these functionalities or, therefore, providing all these different types of detection in a single analytical chip.
- The invention allows real-time monitoring of macroscopic processes (for example, monitoring of the state of cultures in the analytical chip or the advancement of the fluid front along the microfluidic path) and specific measurements in the light range (for example, changes in absorbance at a given wavelength over time) and electrical range (generation of currents or voltages depending on the redox potential of the environment, variations in pH...).
- The fusion of artificial vision with the system's microfluidic drive mechanism allows the creation of an information loop through which the progress of the different processes can be actively controlled on the analytical chip itself. This allows for a number of possible applications, including microfluidic processes monitoring in the device on a visually basis and fluidic actuation on the analytical chip based on a visible signal. In addition, through the combination of the drive mechanism described and the artificial vision module, it is possible to carry out different fluidic processes of variable complexity in a parallel manner, while the results of said processes can be measured precisely from the use of the artificial vision module, which is not limited to reading a color on an opaque substrate, but rather allows the use of quantitative analytical methods such as colorimetry, turbidimetry, fluorimetry and luminescence through its different emitters and receptors.
- Through the use of the drive mechanism in conjunction with the electronic interface and the artificial vision module, it is possible to carry out different tests that do not require thermal control in the same analytical chip, being able to carry out colorimetric, turbidimetric or electrochemical determinations at room temperature in the analytical chip.
- Portability and autonomy: In the case of the described invention, it is possible to carry out different types of analysis in a portable system that includes a power management unit capable of feeding the different functional modules included in the system's actuator platform. The optimization of the different actuators, especially the thermal actuator, means that energy consumption can be supplied by portable batteries, thus adding the possibility of its use in any environment.
- By adding a thermal module to the system and its feedback with artificial vision, it is possible to perform more accurate control over the processes carried out in the analytical chip. In addition, this combination of the thermal module with the artificial vision module allows the differentiation between different adjacent thermal areas on a single chip and thus offers the possibility of parallelizing different processes on a single piece of equipment, without the need for separating functional areas and being able, therefore, to carry out tasks of different kinds simultaneously. While the temperatures obtained by the existing systems in the prior art are unique in the entire device, the present invention is capable of delimiting the different areas of thermal action in the same device, thereby being able to carry out different processes on a single analytical chip. This allows a series of applications on the device, such as the performance and thermal monitoring of analytical processes or culture in the analytical chip, being able to parallelize different processes on a single platform.
- The combination of the previously described electronic interface, thermal actuation and artificial vision modules allows the generation of a system capable of carrying out different tests in the same analytical chip, in which it is possible to control different parameters of temperature, actuation and detection (light, fluorimetric, electrochemical or turbidimetric) depending on the needs of the test. For example, and in a non-limiting way, it is possible to carry out a quantitative genetic amplification test or quantitative PCR (qPCR: quantitative polymerase chain reaction), in which the thermocycling of the sample and the detection of a fluorimetric signal in each of the temperature cycles are performed, at the same time that different biochemical tests are carried out in the adjacent areas given the capacity of differentiating different thermal areas in the system, being therefore different from solutions present in the state of art.
- The system's own connectivity, together with its data processing module, in which the results obtained in the processes carried out are stored, allows the anonymization of analytical data and their large-scale study to obtain analytical trends and advantageously clarify analytical patterns or matching parameters.

These and other advantages are derived from the detailed description of the invention that is set forth below.

### BRIEF DESCRIPTION OF THE FIGURES

A series of drawings are described very briefly below, that help to better understand the invention and that are expressly related to an embodiment of said invention that is presented as a non-limiting example thereof.
FIGURE 1.- Shows a block diagram of the modular architecture that constitutes the actuator device of the system, according to a preferred embodiment of the invention.
FIGURE 2.- Shows a complete electronic interface that communicates the analytical chip with the computer module of the system, according to a possible embodiment of the invention.
FIGURE 3.- Shows a thermal module of the system, according to a possible embodiment of the invention.
FIGURE 4.-. Shows an artificial vision module of the system, according to a possible embodiment of the invention.
FIGURE 5.-. Shows a drive module of the system, according to a possible embodiment of the invention.
FIGURE 6.-. Shows an external view of the container in which the system modules are included, according to a possible embodiment of the invention.
FIGURE 7.- Shows a detailed view of the automated entry/input bay for the integration of the analytical chip assembly with the system modules inside the container, according to a possible embodiment of the invention.
FIGURE 8.- Shows an external view of the container of the system modules and the place in which the analytical chip is housed and a touch screen with the user interface for the selection of operating modes of the system.

### PREFERRED EMBODIMENT OF THE INVENTION

A preferred embodiment of the clinical analysis system that is proposed comprises an actuator device which, in turn, is made up of different functional modules that, together, allow the action of an analytical chip in different areas (electrical, fluidic, thermal, lighting, electronic actuation, etc.).

The system implements a multi-analytical technology capable of performing clinical analyzes in a portable, fast and automated way, and is made up of two main parts that interact with each other: the analytical chip and the actuator device. The analytical chip combines several technologies:
- Microfluidic technology: Through the microfluidic design, channels are generated that conduct the necessary fluids to carry out the steps of analysis, mixing them, filtering them... In addition, the microfluidic design allows defining areas to store the fluids that, in turn, work as means of impulsion or for defining the areas where chemical processes are carried out: the reaction chambers.
- Electronic technology: The addition of a conductive metallic layer on some surfaces of the analytical chips makes it possible to carry out some electrical actions on specific areas (such as heating them, for example) or even to incorporate electronic components in regions of interest (such as LEDs, phototransistors,...) to be able to measure and act directly where it is needed. This makes it possible to obtain information (analytical information) directly from the region of interest itself (the reaction chambers).

The analytical chips communicate with the actuator device proposed herein so that it can read the signals that are being collected by the sensors integrated in the chips, for which purpose the analytical chip is connected to a computer module that reads and interprets the signals.

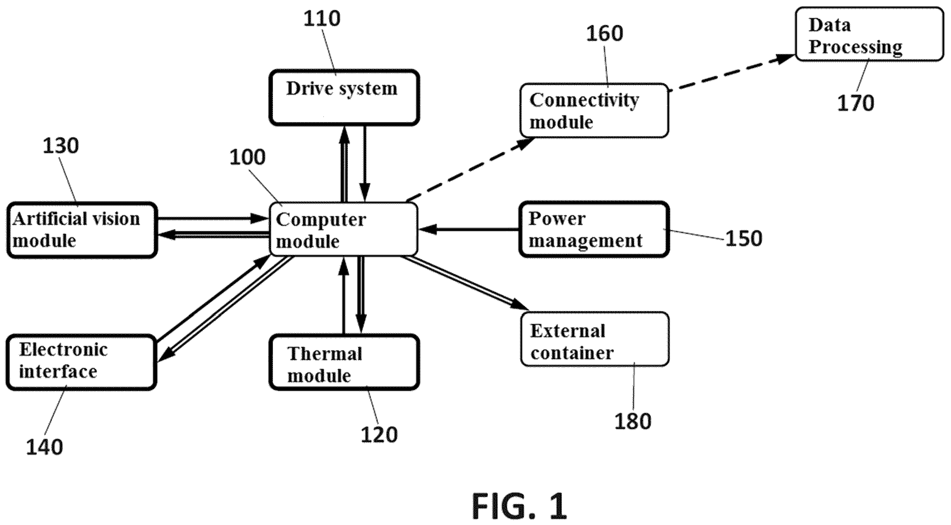

Figure 1 shows all the different individual modules that can integrate the actuator device of the system and their connection, illustrating with arrows between modules in a continuous line the transmission/reception of signals and commands (arrows with a double continuous line) between the modules that define their direct relationship, while the dashed-line arrows show the exchange of data.

The modularity of the device/system allows carrying out different combinations of modules that determine by themselves customizable functional units. In these combinations, which give rise to different possible embodiments of the invention, there is always a computer module integrated with one or more of the other modules in an external container. The integrity of the system depends on the foregoing as well as the control of the different functional modules respectively, which are listed below, together with their numerical references, and are described in detail later.

| | |
|---|---|
| Computer module | **100** |
| Drive module | **110** |
| Thermal module | **120** |
| Artificial vision module | **130** |
| Electronic interface | **140** |
| Power management module | **150** |
| Connectivity module | **160** |
| Data processing module | **170** |
| External container | **180** |

The actuator device controls the progress of the various analytical processes by combining the different actuation modules mentioned above. To meet the needs of each of the analytical processes to be integrated, the basic functionalities of the modules/components of the actuator device are the following:
- A miniaturized computer module **100** where all the processes are controlled and the signals are interpreted, integrates all the signals received by the system and transforms them into analytical results, and also provides connectivity to the system. The computer module **100** can communicate through the connectivity module **160** of the system with a data processing module **170** to carry out the study and comparison of the analytical results in a prospective manner and, thereby, generate diagnostic patterns.
- A fluid drive module **110** controls the advancement of the different fluids in the analytical chip and controls which fluids are introduced.
- A thermal actuation module or thermal module **120** allows the temperature at which the different thermal areas of the analytical chip are to be modified according to the needs of the clinical trial.
- An artificial vision module **130** allows carrying out the different monitoring and measurement processes in the analytical chip, carrying out the prior identification of the analytical chip inserted in the system.
- An electronic interface **140** through which the sensors and actuators integrated in the analytical chip are communicated with the computer module **100** of the actuator device, thus being able to control the different signals acquired by the analytical chip, as well as command or activate the different actuators therein.
- A power management module **150** autonomously powers the system allowing its portability, generating the necessary voltage lines and charging the batteries to power the system modules.
- A connectivity module **160** of the system for communication, by means of different information protocols, of the results to external central systems.
- An external container **180** or external housing that protects all the previous modules of the actuator device and where the analytical chip is inserted through an input bay.

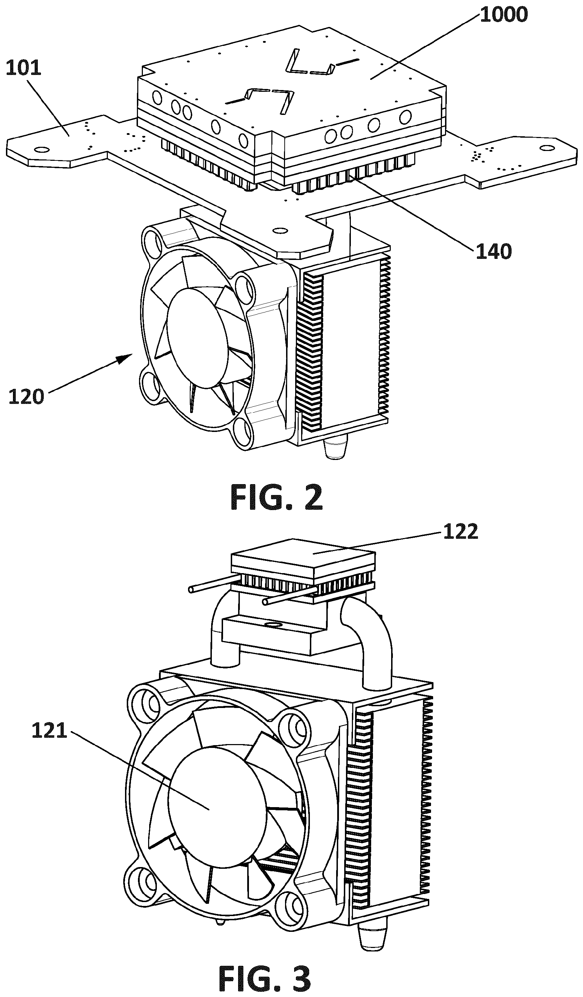

Thus, the proposed system comprises the actuator device and an analytical chip **1000,** such as the one included in Figure 2, which is an active analytical chip which includes both the microfluidic design of each of the analytical tests and the necessary reagents and those actuators and sensors necessary to carry out the complete process in conjunction with the actuator device. Preferably, the chip is made of an optically transparent and biocompatible polymeric substrate (for example, PMMA: polymethyl methacrylate, PC: polycarbonate, or COC: cyclic olefin copolymer). The analytical chip **1000** is made up of different layers, which include the different elements necessary to carry out the designed test (electronic and thermal sensors and actuators, and microfluidic actuators such as mixers, separators or reservoirs). Specifically, those electronic elements included on this chip communicate with the actuator device through the electronic interface **140** by means of electrical contacts that allow the reception of data collected by the sensors, as well as the actuation of the different actuators based on the commands programmed in the actuator device. In addition, the analytical chip **1000** includes different reservoirs in which different fluids (reagents, samples, controls, etc.) necessary to carry out the clinical trial are included. Figure 2 also shows a connection board **101** that provides the biocompatible electrical contacts to connect (come into contact with) the different analytical chips **1000** or microfluidic cards with all the system electronics. The computing module **100** is a microcomputer that is connected through that connection board **101** that is part of the electronic interface **140** with the analytical chip **1000.** More particularly, the method of connecting the analytical chip **1000** with the electronics is carried out through the electrical contacts of the electronic interface **140** that come into contact with the metal connection pads of the LoC ("lab on a chip") by fixing the consumable in its predetermined position by the fixer (element that is inside the reader/actuator device and that exerts pressure on the consumable to ensure electrical contact).

Additionally, the system includes a user interface, for example, the graphical interface of a computer screen or mobile terminal, to provide options the system control by the user and communication of results. The user interface may include different peripherals, without being limiting or excluding, for the presentation of information by acoustic means, haptic interfaces, etc.

Next, each of the modules/components of the actuator device and the relationship between the different functional modules of the technology are described in more detail, according to possible embodiments.

Figure 2 shows an embodiment of the complete electronic interface **140** that communicates the analytical chip **1000** with the computer module **100** of the actuator device. The electronic interface module **140** is one of the modules with the more connections with the rest of the components of the system, after the computer module **100.** This electronic interface **140** allows activating the different actuator electronic components included in the analytical chip **1000,** as well as the reading of data received from the different sensors incorporated in the analytical chip **1000,** to deliver the data collected from the analytical chip to the computer module **100.** Therefore, the electronic interface **140** acts as a communication link between the analytical chip **1000** and the actuator device that allows the electronic connection between the chip itself and its corresponding sensors and actuators with the actuator device. The electronic interface **140** is connected both to the analytical chip **1000** and to the power management module **150** so that the actuations carried out in the analytical chip **1000** can be fed and to the computer module **100** that collects and processes all the information of the analytical chip **1000.** Through the use of electronic connection pads and biocompatible electrical contacts, the electronic interface **140** allows communication between the active parts of the system, providing a direct connection with all those modules that have actuators or sensors inside the analytical chip and creating a closed circuit of signals. In this way, and by way of example, the thermal module **120** communicates through the electronic interface **140** with the heating elements in the analytical chip, while the thermal sensors of the system send the information collected through said interface for its processing in the computer module **100** and subsequent use as information for the control of the thermal module **120** itself. On the other hand, this electronic interface **140** is responsible for communicating the information collected by the electrodes included in the analytical chip **1000** through flat contact pins (in contact with the metallized "pads" of the chip and, in turn, each one of them connected to the different sensor and actuator elements of the system) to the computer module **100** itself to study the signal and generate an analytical result from it.

Figure 3 shows an embodiment of the actuator part of the thermal module **120,** which includes a temperature sink **121,** a thermoelectric cell **122** and several temperature sensors that allow it to be mapped throughout the different processes. Furthermore, all the thermal sensors and actuators integrated in the analytical chip **1000** itself are also included in this thermal module **120** of the system. The thermal module **120** allows the temperature of different active zones to be controlled depending on the needs of the test or tests and is made up of two parts, presenting a series of connections that allow its integration with the rest of the system: an actuator part (thermal) that belongs to the actuator device and another part of the thermal functional module in the analytical chip **1000.** In the analytical chip **1000,** there are thermal actuators and temperature sensors that are controlled through the electronic interface **140.** On the other hand, the actuator device contains different thermal actuators (thermoelectric cells, temperature sinks, etc.) which, together with a closed control loop through temperature sensors in the actuator device, allow temperature control in the complete system, the data being managed within the computer module **100.** In addition, the segmentation of the different thermal actuators of the thermal module **120** (both in the actuator device and in the microfluidic device **1000**) allows differentiating thermal zones, thus being able to delimit actuation areas based on the temperature in the same system, being able to parallelize areas according to its target temperature and therefore being able to carry out different kinds of tests without jeopardizing the viability of the adjacent ones. Specifically and by way of example, the thermal module **120** makes it possible to maintain 37°C in the areas where thermostable biochemical tests are required to be carried out, while it is capable of carrying out a thermocycling protocol with consecutive cycles from 98°C to 62°C in the area delimited for genetic tests without affecting the rest of the areas. Specifically, the thermal module **120** is controlled by the computer module **100,** which contains the different thermocycling programs based on the analyzes to be carried out in the system. Thus, the computer module **100** sends the orders to the different actuators of the thermal module **120,** while the thermal sensors associated with said thermal module **120** send the information collected to the computer module **100** for its processing and generation of the information feedback system with the which can perform an accurate temperature control loop. In a global way, the thermal module **120** has a thermal actuation on the rest of the modules of the system by activating the different attached actuators (heaters, thermoelectric cells, fans, etc.), providing the system with the capacity to carry out parallel processes that until now could not be parallelized in a single device, thereby improving the performance capacity of the systems described so far. In addition, the integration of temperature sensors in the analytical chip **1000** allows the monitoring of the temperature in the chip through the electronic interface **140,** thus being more accurate with respect to the reaction temperature than that derived from an external control.

Within some of the technical needs that clinical analysis processes have, is that of carrying out extreme temperature changes and, in central laboratories, this is achieved by means of thermal cyclers that change the temperature of the tests as needed as quickly as possible. Specifically, in an example of clinical analysis, these extreme thermocycling processes are necessary to carry out PCR analysis, to verify the presence of infectious viruses. Currently, the thermocycling process of a virus such as SARS-CoV-2 is carried out at a maximum temperature of 98°C and a minimum of 62°C. These temperatures are incompatible with other analysis processes, which normally need to be carried out at a temperature similar to that of the human body, around 37°C. In order to be able to combine PCR processes with other types of processes, apart from thermally sectioning analytical chips, manufacturing them with materials with high thermal inertia and actuating and measuring thermally in the area of interest, an automatically controlled thermal block is needed that cools the areas of analytical chips that are most sensitivity to real-time thermal changes and support heating in areas where speed of temperature rise is needed.

For this purpose, there are the following parts that make up the thermal module **120:**
- A thermal block made up of one or more Peltier cells and a thermal dissipation block. The peltier cell is an electrothermal actuator that allows heat power to be emitted (heated) or absorbed (cooled) depending on the voltage at which it is fed. These cells need a thermal dissipation block to be able to dissipate the temperature changes to which the other faces are subjected.
- A control software that adjusts the temperature at which the thermal blocks act in real time through a PID controller (PID: Proportional, Integral and Derivative). This is done by programming the controller to adjust the voltage applied to the Peltier cell based on the amount of thermal power that needs to be applied to the system to reach the target temperature (by cooling or heating).
- The thermal module **120** interacts with the thermal sensors and actuators integrated in the analytical chip **1000** to be able to measure and act on the area of interest. This allows you to have a real-time view of the temperature directly in the area, and not in a calculated way, as is usually done.

This thermal module **120** makes it possible to have thermocycling processes that are compatible with other processes with different thermal needs and that are produced automatically. In addition, by being able to achieve very high temperature ramps for the industry standard, having to heat small areas instead of large thermal blocks and having tight controllers; thermal processes, such as PCR tests, can be carried out more quickly than what is available in the state of the art. As a comparison, PCR for SARS-CoV-2, the virus that causes COVID-19, is currently being carried out in about 3.5 hours. With the thermal module that is presented acting on a CLC designed with this analytic, they are currently being done in about 2 hours and it is expected to reduce them to around an hour, while other tests that mark the severity of the disease that would otherwise have to be done separately are performed on the same chip.

There are bench-top systems for use in thermocycling tests in the laboratory that combine a thermal module with artificial vision and use an electronic interface but only for thermal control of the block and, in these cases, the equipment does not have any fluidic control, so the consumable must be loaded by the user. Compared to existing thermocycling systems, what makes the proposed system technically advantageous is the combination of the thermal module **120** described together with the artificial vision module **130** and the drive module **110** that are described below.

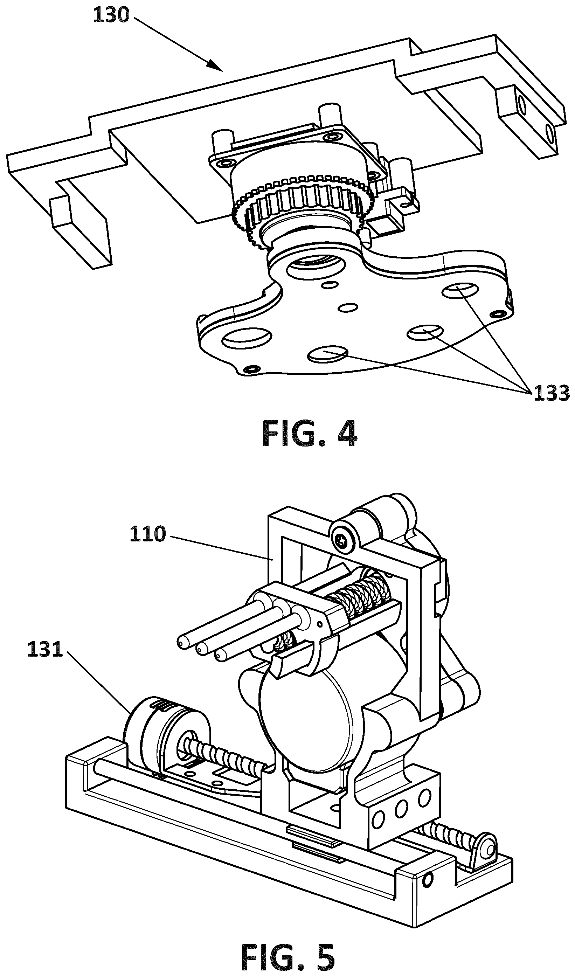

Figure 4 shows an embodiment of the artificial vision module **130** which includes a camera with a high-definition CMOS sensor, a mechanical system or rack of optical filters adapted to the different sections of the visible spectrum that sectorizes the light frequency to the area of interest and a series of light actuators **133** in the different wavelengths required (a laser emission equipment in different common frequencies for optical detection processes in the visible spectrum and LED emitters in the IR -infrared- and UV -ultraviolet- bands). The artificial vision module **130** also interacts with other light sensors and actuators that are included in the analytical chip **1000.** Thus, the artificial vision module **130** of the system comprises a set of light and image sensors and actuators, integrated both in the analytical chip **1000** and on the actuator device, which allow real-time monitoring of the activity in the actuator device and of the analytical chip **1000.** Among the different elements that make up the artificial vision module **130,** by way of example are: a set of light sensors including a high-definition camera that allows the interior of the actuator device to be viewed in real time, and can be viewed in turn through the graphic interface of the system, or by analyzing the image using the computer module **100;** a series of light actuators (for example, LED diodes, laser emitters, etc.) in different wavelengths for use depending on the requirements of the test or tests to be carried out; and a series of light filters that, together with the different light emitters and receivers, allow the detection of the signal at a predetermined wavelength. The high-definition camera, together with the series of LED and laser-type light actuators, and the set of optical filters that modulate the signal collected by the camera, allows detection, by means of different signals and their interpretation to achieve results, of the tests integrated in the analytical chip in different modalities. Specifically, although not limiting, it allows performing colorimetric, fluorimetric, turbidimetric and chemiluminescent tests on said chip, allowing a wide field of detection. The artificial vision module **130** connects with the computer module **100,** which processes the data collected by the artificial vision module **130,** translating the information from raw data to result by applying algorithms developed for each of the detection modalities and sends the programming based on the test to be carried out for the selection of the different steps to be carried out. On the other hand, the artificial vision module **130** is also connected to the electronic interface **140** for the actuation of different sensors and actuators included in the analytical chip **1000** itself, being able both to send signals from the computer module **100** for their activation as well as receive said information from the sensors.

The machine vision module **130** runs artificial vision algorithms trained to detect the type of analytical chip **1000** that is inserted into the actuator device, as well as to control the processes that occur in the reaction chambers. Many clinical analysis processes perform the detection of the parameters of interest in an optical way, either through colorimetry, turbidimetry,... For this purpose, it is necessary that the analysis devices include light emission systems of the type of light that is required and systems for light detection of the frequency regions of interest. This, combined with algorithms for calculating parameters through light detection, allows the analysis of parameters. The combination of all these parts allows optical processes common in the clinical analysis industry and other disruptive processes such as Raman-type spectroscopy to be carried out.

Figure 5 shows an embodiment of a drive (impulsion) module **110,** which comprises a set of mechanical actuators that, together with sensors included in the analytical chip **1000,** allow the control of the advance of the fluid front throughout the established process. This drive module **110** is adjustable and acts as a mechanical interface between the chip **1000** itself and the actuator device, being replicated several times in the actuator device itself to allow a greater range of action in the system. To carry out analysis processes, it is necessary to move fluids from one area to another, precisely determining the amount of fluid incorporated, as well as the time of movement or fluid mixture. A control software defines which fluid has to be driven by the drive module **110,** in which amount and when. This software also activates or deactivates simultaneous pumping processes (it can decide whether to pump one, two, three or the number of fluids required). By way of example and in a non-limiting manner, the drive module **110** is made up of: a matrix of movement axes, position regulator motors, advance motors and moving pistons **131** inside the actuator device; while in the analytical chip **1000** it has closing elements, fluidic reservoirs and sensors of different kinds for the mechanical actuation of the drive module **110.** These sensors can be light, resistance, impedance or even part of the artificial vision module **130** previously described, being able to control with them the advance of the fluid front in the analytical chip and thereby create a closed control loop. The analytical chip **1000** incorporated in the system to the actuator device integrates for the operation of the drive module **110:** microfluidic pistons that contain the necessary reagents while acting as a physical separation interface between the mechanical drivers and the fluidics inside the analysis chips, and fluid position sensors that detect the position of the fluid interface accurately, which ensures the mixing ratio of the reagents. The drive module **110** performs the force towards the fluidic pistons by means of a mechanical system using drivers defined for this purpose, drivers that are activated or deactivated in a controlled manner and are symmetrical (they can go forward or backward). The drive module **110,** therefore, includes not only a series of motors connected to moving actuators (pistons, gears, etc.), but also position sensors that allow real-time control of the position and advance of the fluid front during the performance of the test. In this way, this drive module **110** is directly connected to the computer module **100,** which sends the activation signals of said motors and actuators for the start of the drive, at the same time that it sends signals from said position sensors (final sensors, light or thermal sensors in the analytical chip, etc.) to the same computer module 100 so that said signal is processed as information feedback for the precise control of the operation of this driver module **110.** Thus, the monitoring signals of this driver module **110** can be connected in two ways to the computer module **100:** directly from the position sensor in the case of end switches, or through the electronic interface **140** in the case of the sensors included inside the analytical chip **1000.** The drive module **110** allows complex analytical tests to be carried out, being able to act in different axes for advancing, retracting, stopping and mixing different fluids in the analytical chip **1000** itself. In addition, the plug element allows the encapsulation of reagents in the chip/analytical chip **1000,** which enables storage of the chip as a ready-to-use solution.

This system, from the microfluidic point of view, is a differential leap with the state of the art. Currently, automated driving processes require large syringe drivers attached to microfluidic chips, making them unfriendly to use. In addition, it prevents really portable systems from being defined, since a piston system (which can easily reach 2 Kg in weight) is required for each of the impulses, at the same time that it requires making connections with tubes from the chips to external pistons. And from the clinical point of view, this system allows complex clinical processes to be carried out, which until now required laboratory technicians to do so or complex and heavy equipment, which makes it possible to carry them out away from hospital laboratories or to automate them.

Although outside of the portable or desktop devices, such as the proposed system, there are automation robots where the fluidic control is carried out by means of a robotic arm with a suction system, these robots differentiate the different processes, both thermal and actuation in spatially separated areas. However, in the proposed system, combining the drive **110,** thermal actuation **120** and electronic interface **140** modules, it is possible to carry out different automated processes in which to control several parameters: the detection of different analytes in a medium by means of electrochemical sensors or through light sensors and actuators that are integrated in the analytical chip **1000;** regulation of the assay temperature based on the optimal reaction conditions; and the flow in the analytical chip **1000.** By way of example, and in a non-limiting way, among these processes there would be both applications for the determination of biochemical, immunological and even genetic parameters, as well as the maintenance of cell cultures under the optimum conditions of temperature and concentration of the different necessary metabolites by measuring them in the culture medium by electrochemical detection.

The computer module **100** is the core of the system realization, a "brain" to manage all the simultaneous processes that are taking place, in charge of the emission and reception of signals that, together with the actuation modules, allow the operation of the system. The computer module **100** is implemented in a microcomputer that acts as a central computer, with a lightweight operating system configured so that everything occurs in real time, having the necessary components to be able to connect the system to the Internet and thus be able to send information to secure servers in encrypted form. In addition, it is the signal processing center of the system, as it is in charge of processing the signals obtained from the different sensors of the system for the generation of two types of information: process information (for example, position of the drivers, real-time temperature of the system, etc.) and analytical information (for example, change in light emission in a sample, change in electrical potential in the environment of an electrochemical sensor, etc.). This second type of data is processed on the computer module **100** for the generation of analytical results, which are later represented in the graphical interface of the system itself, as well as can be sent through the connectivity module **160** to the external data network. for communication with other data analysis or management systems (for example, patient records, clinical laboratory management systems, etc.). The computer module **100** comprises a set of boards, components and processors that, through their programming, allow the system to be controlled in an integral way, including control blocks for each of the functional modules, as well as the processing of the data obtained during its operation. In this way, there are electronic blocks dedicated to the control of the thermal module **120,** the drive system **110,** the artificial vision module **130** and the integration of signals coming from the electronic interface **140** with the analytical chip **1000.** On the other hand, all these blocks are connected to the computer module **100** for the collection of data from each of the functional blocks and the harmonized control of each one of them in carrying out the different programmed processes, as well as the conversion of the data obtained into analytical results following the specific detection algorithm for each process and its subsequent communication to the user through the pre-established graphical interface or the communication protocol with the central system specified by the user.

The connectivity module **160** is a communication module integrated in the actuator device that allows data to be sent from the device itself to different data storage and management systems. This connectivity module 160 allows the synchronization of the results obtained by this technology with databases external to it, through different connection protocols by encrypting said results into the necessary format for their correct adaptation to the destination, including centralized medical history, network devices or other external storage systems. This connectivity module **160** is therefore connected to the computer module **100** itself for receiving the analytical results and their subsequent communication, via wireless or wired connection, to external systems, such as data clouds, medical data storage systems of patients, etc.

Through the connectivity module **160,** the computer module 100 communicates with a data processing module **170** which, in turn, has two parts: data management included in the computer module **100** itself for issuing analytical results, and the large-scale study of said data obtained by the system on external servers that allows the inclusion of studies based on methodologies that use large-scale data ("big-data") in the system. Thus, it allows prospective studies to be carried out based on the analysis of the data obtained from the large-scale system to discern behavior patterns of the different tests carried out that may influence the operation of new devices or consumables, or establish correlations between different parameters to analyze. This data processing module **170,** therefore, is not included as a physical module in the system, but is made up of several elements included in the computer module **100,** as well as uses the connectivity module **160** itself for data transmission to the external server.

Finally, the power management module **150** is an independent module that allows the management of a bank of batteries integrated into the actuator device itself, which provide the system with autonomy once disconnected from the electrical network and allow the portability of the system since they are rechargeable batteries that feed the different functional modules of the system. This power management module **150** connects with all the actuator modules to provide them with power, and only sends data to the computer module **100** for the representation of the battery status in the graphical interface. To power all the modules of the actuator device, it is necessary to perform power conversions to adapt to different needs, so the power management module **150** uses robust power electronics, which do not emit electrical noise or overheat the devices. For this purpose, a hardware design adapted to the device and a thermal dissipation of the power that cools it, have been carried out. In addition, a battery management system or BMS has been incorporated to be able to charge the battery bank that is incorporated in the devices to make it portable.

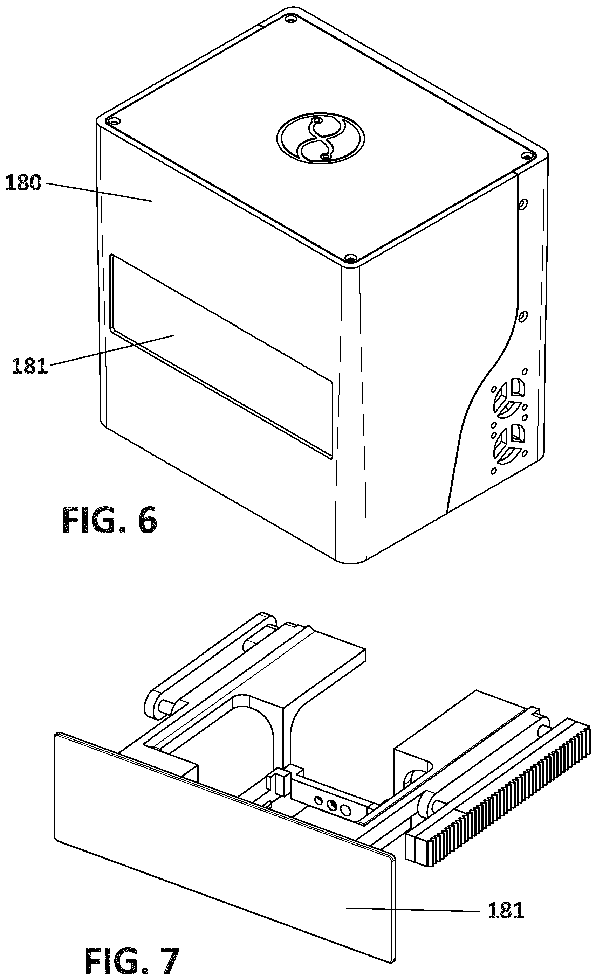

All the elements of each functional module that are integrated as a single functional platform are housed in an external container **180,** such as the one shown in Figure 6 according to a possible embodiment, allowing the fitting of the different functional blocks and acting as a support for the different modules as a single device or apparatus, occupying the minimum possible volume. The modules are distributed according to which area of the analytical chips they have to act on. The external container **180** is made up of different mobile elements that are controlled by the computer module **100,** such as an input bay **181** shown in Figure 7, for the input or loading of the analytical chip **1000** in the actuator device. The input bay **181** is extracted to introduce the analytical chip **1000** on it. In addition, the external housing or container **180** has an area where the tablet or terminal with a screen can be placed, which acts as a graphical user interface and this area also enables the wireless charging thereof.

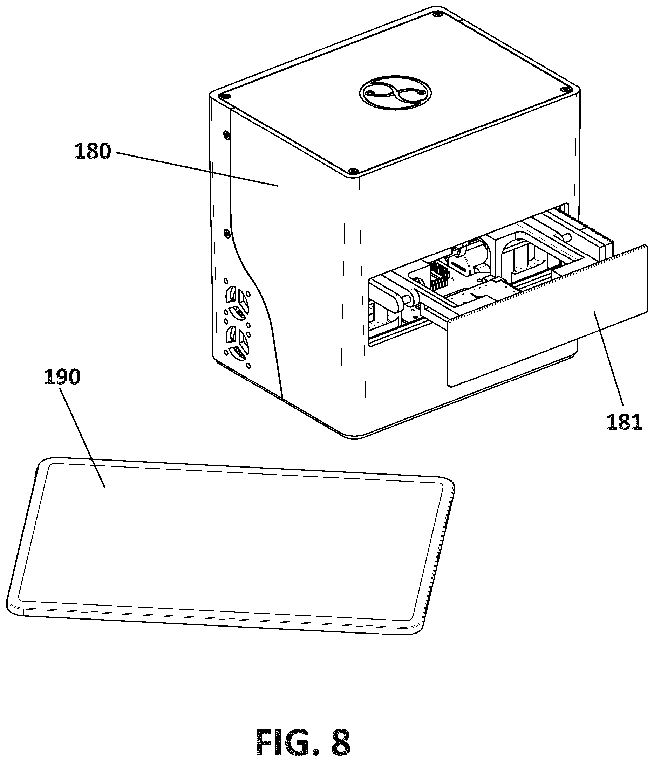

Figure 8 illustrates an external view of the complete system, including a user interface, wherein, according to a possible embodiment of the invention, it shows i) the external container **180** inside which there are different electronic control boards and necessary computer modules for the generation of results within the platform and that allow the control of the different actuation modules of the system, and ii) the user interface, which acts as an actuation interface for the selection of modes within the actuator device, implemented on a screen **190,** for example, a touch one. The control screen presents in a graphical user interface the software included in the computer module **100** for the user to configure the control of the system. In addition, from this user interface, data of the user's own use is generated and communicated to the computer module **100** for processing (for example, selection of an analysis mode, wireless network configuration, etc.).

Next, the interaction between the different modules of the system that defines clinical analysis methods that can be implemented in the previously proposed system is described in detail, according to possible use cases.

### - System for the quantification of creatinine in a biological sample using the Jaffe method:

The described system is designed for the determination of the colorimetric change in biological samples dependent on the concentration of creatinine present once said sample is exposed to an alkaline picrate solution. This system is composed of the previously proposed actuator device and an analytical chip (analytical chip 1000) in which the reagents necessary to carry out the determination are (in this case, a mixture of equal volumes of 25mM picric acid and 0.4M sodium hydroxide). The actuator device includes the functional modules responsible for orchestrating each of the active processes in the analytical chip to read the results of the creatinine analysis in the biological sample using the Jaffe method.

In this way, the analysis process is carried out as follows:
The sample to be analyzed, in this case blood plasma, is introduced into the sample input hole of the analytical chip, filling said hole up to the volume signal. Said hole is closed with the closure element, being ready for its introduction into the actuator device. This device is turned on, which removes the input bay 181 of analytical chips for their loading. The analytical chip is inserted following the instructions for positioning the bay itself, and the bay's closing button is activated. Once the chip input is closed, the analysis mode is selected on the user interface for the selection of modes of the actuator device, which may be: i) an automatic preprogrammed mode, in which the electronic interface recognizes the type of analytical chip and loads the sequence of actions to be carried out for the specific test, or ii) a manual mode in which the user can modify the analysis parameters necessary for the processing of the analytical chip recognized by the system. In the case of automatic mode, once it is selected, the actuator device proceeds to start the analysis sequence.

First, the thermal control module **120** is activated, which proceeds to stabilize a temperature in the analytical chip of 37°C by activating, through the electronic interface **140,** the functional metallic heaters integrated in the analytical chip **1000.** Once said temperature is reached, the mechanical drive module **110** is activated which, through the action of the motors associated with the drive pistons, introduce both the working reagent and the sample into the microfluidic circuit of the analytical chip. In this microfluidic circuit, the two fluids are mixed, passing the mixture to fill a reaction chamber aligned with the elements of the artificial vision module **130.** This artificial vision module **130** monitors the fluid front along the microfluidic path in the analytical chip, ensuring the correct filling of the chamber. Once 30 seconds have elapsed since the activation of the drive process, the artificial vision module **130** proceeds to activate the light source, which selects the wavelength necessary for the measurement of the absorbance change that will occur in the sample along the chemical reaction. In this way, an emission wavelength of 500nm is selected, the modulated light beam passes through the sample and is detected by the image sensor. This image sensor sends the collected data to the computer module **100,** which extracts the color data and processes it using a predetermined algorithm, thereby extracting real-time absorbance data from the sample over a total period of time of 60 seconds from the activation of the light source. This data is processed by said computer module **100** and represented in the graphical user interface of the actuator device.

### - System for determining the presence of genetic sequences of SARS-CoV-2 in biological samples by polymerase chain reaction, qPCR:

The actuator device described is also designed for the detection of genetic sequences associated with the SARS-CoV-2 virus through a process of amplification of genetic material by polymerase chain reaction associated with fluorimetric probes ("reporters") in real time (qPCR). In this case, the proposed analytical system comprises an analytical chip **1000** which, in turn, comprises a mastermix containing deoxyribonucleotides, MgCl, polymerase and primersspecific for the sequence to be determined - the Spike gene of SARS-CoV-2 according to the sequence recommended by the CDC with fluorimetric reporter FAM (6-carboxyfluorescein) and the RNase P gene as internal reaction control with fluorimetric reporter ROX (carboxyrhodamine)- , as well as a cell lysis buffer made up of 6M guanidine hydrochloride and a washing buffer made up of a 50% absolute ethanol solution).

In this way, the analysis process is carried out as follows:
The sample to be analyzed, in this case nasopharyngeal aspirate, is introduced into the sample input hole of the analytical chip **1000** or analytical chip, filling said hole up to the volume signal. Said hole is closed with the closing element, being ready for its introduction into the actuator device of the analysis system. This device is turned on, which removes the input bay **181** of analytical chips for loading. The analytical chip is inserted following the positioning indications of the bay **181** itself, and the closing button of this is activated. Once the chip input is closed, the analysis mode is selected on the user interface, which may be an automatic preprogrammed mode, in which the electronic interface recognizes the type of analytical chip and loads the sequence of actions to be carried out for the specific assay, or a manual mode in which the user can modify the analysis parameters necessary for the processing of the analytical chip recognized by the system. In the case of automatic mode, once it is selected, the actuator device proceeds to start the analysis sequence.

First, the thermal control module **120** is activated, which proceeds to stabilize an analytical chip temperature of 25°C by activating the functional metal heaters in the analytical chip **1000** through the electronic interface 140. Once said temperature is reached, the mechanical drive module **110** is activated, which, through the actuation of the motors associated with the drive pistons, introduce both the lysis buffer and the sample, both being mixed along the microfluidic path. This mixture undergoes an incubation period of 10 minutes, after which the drive module **110** is activated again, this time to drive said mixture through a silica column in which the extraction of the nucleic acids will be carried out. Once said nucleic acids are bound by affinity to the silica column, the drive module **110** is activated again to wash said column by introducing the washing buffer through the column, after which said column is dried by blowing previously pressurized air into the input holes of the analytical chip. Once this nucleic acid extraction process is finished, the drive module **110** is activated once again to drive the "mastermix" through the column, putting it in contact with the genetic amplification reagents. Once the "mastermix" is in contact with the region of the silica column, the thermal control module **120** is activated, which proceeds to activate both the metallic heaters included in the analytical chip and several thermoelectric actuation modules of the actuator device that, in contact with the analysis chip, regulate the temperature of the analytical chip **1000** until reaching the target temperature of 50°C, which remains stable for the reverse transcription of the sequences for 15 minutes. After that, the thermal module **120** changes the target temperature to 95°C to carry out the first denaturation step, with a duration of 2 minutes, after which the thermocycling process begins, which depends on different actuators that make up the thermal module **120:** on the one hand, the heaters integrated in the analytical chip **1000** are responsible for rapidly increasing the temperature in the analytical chip, on the other hand, the thermoelectric actuators of the actuator device allow both to increase the temperature of the device and to cool it, thereby increasing the slope of the temperature ramps throughout the process; finally, these thermoelectric actuators are coupled to a heat sink **121,** which is made up of physical heat sinks and fans that allow the system to be cooled efficiently. During this thermocycling, therefore, heating functions are activated during the temperature increase, while the thermoelectric modules for cooling are activated during the thermal decrease ramps. This thermocycling process consists of 45 cycles, in which the sample goes through 95°C for 3 seconds and 55°C for 30 seconds. In turn, and after each of these thermal cycles, the artificial vision module **130** is activated, which activates a light emitter at 494nm, corresponding to the excitation of the FAM fluorophore, while activating the motor associated with the rack of optical filters for the selection of both excitation and emission filters associated with this fluorophore. This emitter therefore generates a pulse of light, whose beam passes through the excitation filter, the sample, and the emission filter, and reaches the image sensor, which captures the fluorimetric signal emitted by the sample and processes it accordingly through the computer module **100.** Next, a second light emitter is activated at 587nm corresponding to the excitation of the ROX fluorophore, as well as the excitation and emission filters associated with this fluorophore are selected, emitting a pulse of light and measuring the fluorimetric signal generated by the sample when it is excited. These measurements are carried out once at the end of the thermal cycle, always at the 55°C step, and the data obtained by the image sensor is stored and processed by the computer module **100** for the generation of results. This data is processed by said computer module **121** and represented in the graphical user interface of the actuator device.

### - System for the combined determination of biochemical and genetic parameters :

The device described is also designed for the detection of genetic sequences associated with the SARS-CoV-2 virus through a process of amplification of genetic material by polymerase chain reaction associated with real-time fluorimetric "reporters" (qPCR), as well as such as the quantification of creatinine levels in blood serum. The analysis system comprises an analytical chip **1000,** analytical chip, in which the necessary reagents are found to carry out the determination, in this case, a "mastermix" which includes the deoxyribonucleotides, MgCl, polymerase and "primers" or specific primers of the sequence to be determined: the Spike gene of SARS-CoV-2 according to the sequence recommended by the CDC with fluorimetric reporter FAM and the RNase P gene as internal reaction control with fluorimetric reporter ROX-, buffer of 6M guanidine hydrochloride, 50% absolute ethanol solution wash buffer, and creatinine solution consisting of a mixture of equal volumes of 25mM picric acid and 0.4M sodium hydroxide.

In this way, the analysis process is carried out as follows:
The samples to be analyzed, in this case nasopharyngeal aspirate and blood plasma, are introduced into different sample input holes of the analytical chip until reaching the predetermined volume signal. Both sample inputs are closed with closure elements, leaving the analytical chip ready for insertion into the system's actuator device. This device is turned on, which removes the input bay 181 of analytical chips for loading. The analytical chip is inserted following the instructions for positioning the bay itself, and the bay's closing button is activated. Once the chip input is closed, the analysis mode is selected on the user interface of the actuator device, which may be an automatic preprogrammed mode, in which the electronic interface recognizes the type of analytical chip and loads the sequence of actions to perform for the specific test, or a manual mode in which the user can modify the analysis parameters necessary for the processing of the analytical chip recognized by the system. In the case of automatic mode, once it is selected, the actuator device proceeds to start the analysis sequence.

In this case, different thermal zones are differentiated in a single analytical chip **1000,** thereby performing two discrete parallel processes. First, the thermal control module **120** is activated, which proceeds to stabilize a temperature of 25°C in the analytical chip by activating the functional metallic heaters inside the analytical chip, through the electronic interface **140** of the actuator device, in the area intended for the extraction of nucleic acids and subsequent genetic study, while an area is stabilized at 37°C corresponding to the plasma sample analysis protocol. Once both temperatures are reached, the mechanical drive module **110** is activated, which, through the actuation of the motors associated with the drive pistons, introduce both the lysis buffer and the nasopharyngeal aspirate sample, both being mixed throughout the microfluidic path, while at the same time the drive is carried out in the region intended for the biochemical analysis of the sample together with the alkaline picrate solution. An incubation period of 10 minutes is started for the nasopharyngeal sample with the lysis buffer, during which the creatinine determination is made. For this purpose, once the sample and working reagent have been mixed, they are filled in a reaction chamber aligned with the elements of the artificial vision module **130.** This artificial vision module **130** performs monitoring of the fluid front along the microfluidic path in the analytical chip, ensuring the correct filling of the chamber. Once 30 seconds have elapsed since the activation of the driving process, the artificial vision module **130** proceeds to activate the light source, which selects the wavelength necessary for the measurement of the absorbance change that will occur in the sample along the chemical reaction. In this way, an emission wavelength of 500nm is selected, the modulated light beam passing through the sample and being detected by the image sensor. This image sensor sends the collected data to the computer module **100,** which extracts the color data and processes it using a predetermined algorithm, thereby extracting real-time absorbance data from the sample over a total period of time of 60 seconds from the activation of the light source. This data is processed by said computer module **100,** and represented in the graphical interface of the actuator device as a result of the creatinine determination. Once the 10 minutes necessary for the lysis of the nasopharyngeal sample have elapsed, the drive module **110** is activated again, this time for driving said mixture through a silica column in which the extraction of the nucleic acids will be carried out. Once said nucleic acids are bound by affinity to the silica column, the drive system is activated again to wash said column by introducing the washing buffer through the column, after which said column is dried by blowing previously pressurized air into the input holes of the analytical chip. Once this nucleic acid extraction process is finished, the drive module **110** is activated once again to drive the "mastermix" through the column, putting it in contact with the genetic amplification reagents. Once the "mastermix" is in contact with the region of the silica column, the thermal control module **120** is activated again, which proceeds to activate both the metallic heaters included in the analytical chip as well as several thermoelectric actuation modules that, in contact with the analysis chip, regulate its temperature until reaching the target temperature of 50°C, which remains stable for reverse transcription of the sequences for 15 minutes. After that, the thermal module **120** changes the target temperature to 95°C to carry out the first denaturation step, with a duration of 2 minutes, after which the thermocycling process begins, which depends on different actuators that make up the thermal module **120:** on the one hand, the heaters integrated in the analytical chip **1000** are responsible for rapidly increasing the temperature within said device or analytical chip; on the other hand, the thermoelectric actuators of the actuator device allow both to increase the temperature of the device and to cool it, thereby increasing the slope of the temperature ramps throughout the process; finally, these thermoelectric actuators are coupled to a heat sink **121,** which is made up of physical heat sinks and fans that allow the system to be efficiently cooled. During this thermocycling, therefore, the heating functions are activated during the temperature increase, while the thermoelectric modules for cooling are activated during the thermal decrease ramps. This thermocycling process consists of 45 cycles, in which the sample goes through 95°C for 3 seconds and 55°C for 30 seconds. In turn, and after each of these thermal cycles, the artificial vision module **130** is activated, which activates a light emitter at 494nm, corresponding to the excitation of the FAM fluorophore, while activating the motor associated with the rack of optical filters for the selection of both excitation and emission filters associated with this fluorophore. This emitter therefore generates a pulse of light, whose beam passes through the excitation filter, the sample, and the emission filter, and reaches the image sensor, which captures the fluorimetric signal emitted by the sample and processes it accordingly through the computer module **100.** Next, a second light emitter is activated at 587nm corresponding to the excitation of the ROX fluorophore, as well as the excitation and emission filters associated with this fluorophore, emitting a pulse of light and measuring the fluorimetric signal generated by the sample when excited. These measurements are carried out once at the end of the thermal cycle, always at the 55°C step, and the data obtained by the image sensor is stored and processed by the computing module **100** for the generation of results. This data is processed by said computer module **100** and represented in the graphical user interface of the actuator device.

## Claims

1. An actuator device comprising a plurality of actuation modules for analytical chips, the actuator device **characterized by** comprising:
- a portable external container (180) for housing and supporting the plurality of actuation modules and comprising an input bay (181) for inserting an analytical chip (1000) inside the actuator device by engaging it with the plurality of actuation modules;
- a computer module (100), housed inside the external container (180), comprising a plurality of electronic control blocks, each electronic control block connected to one of the plurality of actuation modules, the electronic control blocks being configured to receive signals obtained from sensors integrated in the actuation modules and to send signals to activate actuators integrated in the actuation modules, the computer module (100) being configured to generate process information and analytical information from signals received from the control blocks and from signals obtained by sensors integrated in the analytical chip (1000) and to deliver analytical results obtained from analytical information processing performed by the computer module (100);
- an electronic interface (140), housed inside the external container (180), which communicates the computer module (100) with the analytical chip (1000), through which the computer module (100) receives the signals obtained by the sensors integrated in the analytical chip (1000) and sends signals to activate actuators integrated in the analytical chip (1000);
- a power management module (150) comprising a battery bank housed within the external container (180) and configured to power the plurality of actuation modules; and wherein the plurality of actuation modules comprises at least one drive module (110), a thermal module (120) and an artificial vision module (130).

2. The actuator device according to any of the preceding claims, **characterized in that** the computer module (100) is configured to deliver the analytical results to a user interface to display the results.

3. The actuator device according to claim 2, **characterized in that** the computer module (100) is further configured to receive battery bank status data from the power management module (150) and deliver said data to the user interface to display the data.

4. The actuator device according to any of the preceding claims, **characterized by** further comprising a connectivity module (160) connected to the computer module (100) and configured to receive the analytical results delivered by the computer module (100) and send the analytical results to at least one external data storage and management system in a format adapted to the external system.

5. The actuator device according to claim 4, **characterized in that** the computer module (100) is additionally configured to analyze diagnostic patterns from a comparison of analytical results with large-scale data obtained through the connectivity module (160) of, at least one, external data storage and management system.

6. The actuator device according to any of the preceding claims, **characterized in that** the, at least one, drive module (110) comprises a set of mechanical actuators configured to regulate, in collaboration with a set of sensors integrated in the analytical chip (1000), a mechanical actuation that is selected between advancing, retracting, stopping and mixing one or more fluids in the analytical chip (1000) introduced into the external container (180).

7. The actuator device according to claim 6, **characterized in that** the set of mechanical actuators comprises a matrix of movement axes, position regulator motors, forward motors and moving pistons (131).

8. The actuator device according to any of claims 6-7, **characterized in that** the computer module (100) is additionally configured to send activation signals to the mechanical actuators to control the mechanical actuation and to receive monitoring signals from the sensors integrated in the analytical chip (1000) to adjust the activation signals.

9. The actuator device according to claim 8, **characterized in that** the computer module (100) is configured to receive the drive module (110) tracking signals directly from one or more position sensors or through the electronic interface (140).

10. The actuator device according to any of the preceding claims, **characterized in that** the thermal module (120) comprises a temperature sink (121), a thermoelectric cell (122) and temperature sensors configured to define, in collaboration with thermal sensors and actuators integrated in the analytical chip (1000) controlled by the computer module ( 100) through the electronic interface (140), thermal actuation areas whose temperature is adjustable, by the computer module (100) in a closed control loop, inside the analytical chip (1000) inserted in the external container (180).

11. The actuator device according to any of the preceding claims, **characterized in that** the artificial vision module (130) comprises a first set of image sensors and light actuators outside the analytical chip (1000) configured to, in collaboration with a second set of image sensors and light actuators integrated in the analytical chip (1000), visualize real-time images of one or more fluids in the analytical chip (1000) inserted in the external container (180), using a detection algorithm for detecting a wavelength by the computer module (100) configured to translate images displayed into analytical results according to the detection algorithm.

12. The actuator device according to claim 11, **characterized in that** the computer module (100) is configured to detect, by means of signals received from the first set of image sensors and light actuators and signals received from the second set of image sensors and light actuators through the electronic interface (140), colorimetric, fluorimetric, turbidimetric or chemiluminescent signals.

13. A system for clinical analysis comprising the actuator device defined according to any of the preceding claims and an analytical chip (1000) to be connected to the actuator device, the system **characterized in that** the analytical chip (1000) is adapted to the input bay (181) of the external container (180) for connection inside the analytical chip (1000) with the computer module (100) of the actuator device through the electronic interface (140).

14. The system according to claim 13, **characterized by** further comprising a user interface to display the results delivered by the computer module (100).

15. The system according to claim 14, **characterized in that** the user interface is a graphical interface of a mobile user terminal.

16. The system according to any of claims 13-15, **characterized in that** the analytical chip (1000) is made of an optically transparent and biocompatible polymeric substrate, comprising a plurality of layers where the sensors and actuators integrated in the analytical chip (1000) are arranged and a conductive metallic layer added on a surface of the analytical chip (1000).

17. The system according to claim 16, **characterized in that** the conductive metal layer of the analytical chip (1000) is configured so that:
- the sensors integrated in the analytical chip (1000) send signals through the conductive metal layer directly from a reaction chamber, defined in the analytical chip (1000) as an area where chemical processes are carried out for clinical analysis, and
- the actuators integrated in the analytical chip (1000) act directly on the reaction chamber.
